# FASCICULE DE BREVET EUROPEEN

(11) **EP 2 328 046 B1**
(45) Date de publication et mention de la délivrance du brevet: **14.01.2015**
(21) Numéro de dépôt: 10191545.2
(22) Date de dépôt: 17.11.2010
(51) Int. Cl.: G05B 13/02, F24H 1/18, F24H 9/20, G05D 23/19

(54) **Procédé et dispositif de régulation d'alimentation de puissance**
Verfahren und Gerät zur Leistungsregelung
Method and device for controlling of power

(30) Priorité: 23.11.2009 FR 0958258
(43) Date de publication de la demande: 01.06.2011
(73) Titulaire: S.A.T.E., 90150 Fontaine (FR)
(72) Inventeur: Obrist, Stéphane, 68480 Linsdorf (FR); Martel, Jérome, 68330 Huningue (FR)
(74) Mandataire: Laget, Jean-Loup

(56) Documents cités:
- US-A- 5 040 725
- US-A- 5 692 676
- US-A1- 2003 093 186

## Description

L'invention est relative à un procédé de régulation d'alimentation de puissance, notamment d'un chauffe-eau électrique à accumulation.

L'invention est également relative à un dispositif de régulation d'alimentation de puissance, notamment d'un chauffe-eau électrique à accumulation.

L'invention est particulièrement utile pour assurer la régulation en température d'un chauffe-eau électrique à accumulation, en adaptant particulièrement la consommation énergétique du chauffe-eau à l'utilisation particulière de ce chauffe-eau.

Pour effectuer la régulation d'un chauffe-eau électrique, on utilise des thermostats de régulation agissant sur l'alimentation de puissance pour effectuer un cycle d'alimentation entre deux valeurs, l'une d'enclenchement correspondant à une température basse du chauffe-eau et l'autre de déclenchement correspondant à une température haute ou consigne de service du chauffe-eau.

De manière avantageuse, les thermostats utilisés pour la régulation des chauffe-eau électriques assurent également la sécurité électrique, en déclenchant un coupe-circuit thermique sur dépassement d'une température prédéterminée.

La température de consigne du chauffe-eau peut être réglée par une action d'un utilisateur agissant sur une molette de réglage, ou par une électronique de commande réagissant à des informations de température.

On connaît, d'une part, des thermostats mécaniques qui donnent généralement satisfaction, mais qui ne permettent pas un réglage précis d'une température de consigne. On connaît, d'autre part, des thermostats électroniques qui donnent également satisfaction tout en permettant une programmation de l'alimentation de puissance et en admettant un réglage plus fin de la température de consigne.

Un premier but de l'invention est de permettre une diminution de la consommation énergétique d'un chauffe-eau électrique à accumulation, en modifiant le fonctionnement de la régulation et en modifiant les paramètres d'alimentation de puissance du chauffe-eau électrique à accumulation.

Un deuxième but de l'invention est de fournir un nouveau procédé de régulation d'alimentation de puissance d'un chauffe-eau électrique compatible avec les nouvelles réglementations thermiques entraînant une diminution de la consommation énergétique des chauffe-eau électriques.

Un troisième but de l'invention est de fournir un nouveau dispositif de régulation de chauffage d'un chauffe-eau électrique à accumulation, économique à fabriquer et simple à installer et à utiliser.

Un quatrième but de l'invention est l'association dans un même dispositif robuste et compact d'une sécurité mécanique et d'une régulation électronique.

L'invention a pour objet un procédé de régulation d'alimentation de puissance, notamment d'un chauffe-eau électrique à accumulation, selon la revendication 1 principale.

Selon d'autres caractéristiques alternatives de l'invention :
les étapes de régulation correspondent à un cycle temporel indépendant du cycle temporel des étapes d'apprentissage et des étapes de correction,
les étapes de régulation, les étapes d'apprentissage et des étapes de correction des paramètres ou consignes de régulation en fonction de l'apprentissage effectué correspondent au même cycle temporel.

L'invention a également pour objet un dispositif de régulation d'alimentation de puissance, notamment d'un chauffe-eau électrique à accumulation, selon la revendication 4, comportant des moyens pour la mise en oeuvre d'un procédé de régulation selon l'invention. Le dispositif comporte un microcontrôleur programmable contenant un programme d'exécution des étapes d'un procédé selon l'invention et comporte une mémoire de stockage des paramètres ou consignes de régulation, avant et après correction éventuelle en fonction d'un apprentissage effectué.

Selon d'autres caractéristiques alternatives de l'invention :
Le dispositif comporte un moyen mécanique de sécurité thermique connecté entre l'alimentation électrique et un ensemble portant les moyens de régulation, les moyens d'apprentissage et les moyens de correction des paramètres ou consignes de régulation en fonction de l'apprentissage effectué.
L'ensemble portant les moyens de régulation, les moyens d'apprentissage et les moyens de correction des paramètres ou consignes de régulation présente une conformation de carte électronique pourvue d'au moins un système générant une base de temps de cycle temporel.
Le dispositif comporte des moyens d'interface avec un utilisateur et au moins un moyen de mesure de température relié aux moyens de régulation, aux moyens d'apprentissage et aux moyens de correction de paramètres ou consignes de régulation.

L'invention sera mieux comprise grâce à la description qui va suivre donnée à titre d'exemple non limitatif en référence aux dessins annexés dans lesquels :
La figure 1 représente schématiquement un organigramme représentatif des étapes d'un procédé de régulation d'alimentation de puissance selon l'invention ;
La figure 2 représente schématiquement un dispositif d'alimentation de puissance selon l'invention, apte à effectuer les étapes du procédé décrit en référence à la figure 1.

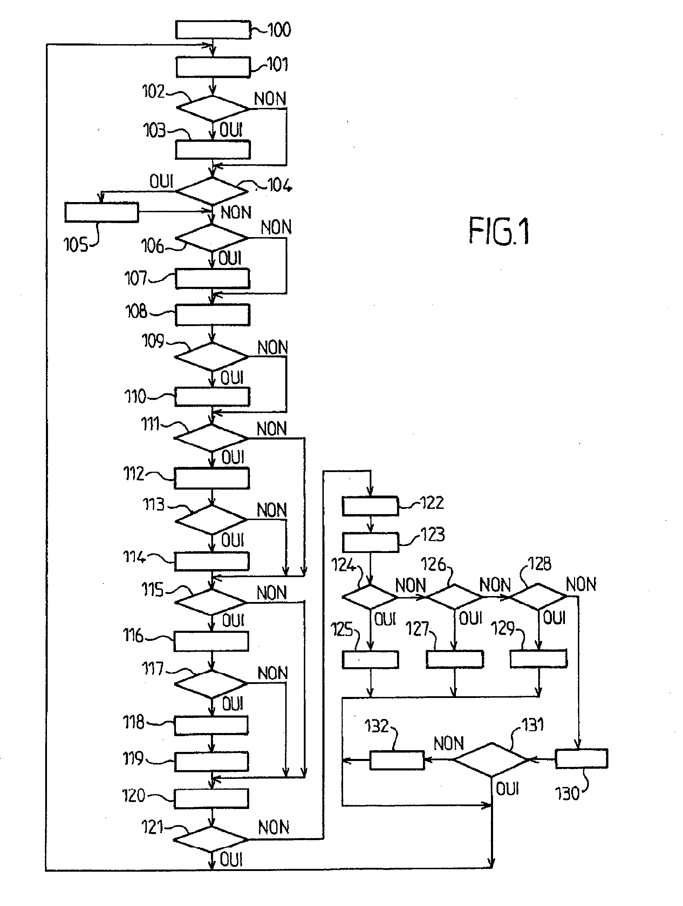

Sur la figure 1, un procédé de régulation d'alimentation de puissance débute par une étape 100 d'initialisation de paramètres variables utilisés dans la suite des étapes du procédé selon l'invention.

A l'étape 101, on effectue la mesure de la température de l'eau contenue dans le chauffe-eau électrique à l'aide d'un moyen de mesure de température, par exemple à l'aide d'une sonde de température de type CTN.

A l'étape 102, on effectue un test pour comparer le nombre de cycles effectués à une durée prédéterminée, par exemple trois semaines.

Dans le cas où le nombre de cycles a dépassé la durée prédéterminée, on passe à l'étape 103 de réinitialisation du nombre de cycles à 1

Dans le cas où le nombre de cycles est inférieur à la durée prédéterminée, on passe à l'étape 104 correspondant à un nouveau test.

A l'étape 104, on effectue un test pour comparer le nombre de cycles à une autre durée prédéterminée, par exemple une semaine.

En cas de dépassement de l'autre durée prédéterminée, on passe à l'étape 105 d'initialisation à 1 d'une variable d'apprentissage.

Dans le cas où le nombre de cycles est inférieur à l'autre durée prédéterminée, on passe à l'étape 106 de test de valeur d'une variable de démarrage et d'une variable d'état, ainsi que d'une variable d'état précédent.

Si la variable de démarrage et la variable d'état sont égales à 0 tandis que la variable d'état précédent est égale à 1, on passe à l'étape 107 d'effacement de la mémoire, d'initialisation de la variable de démarrage à 1 et d'initialisation du numéro de cycles à 1.

Si la variable de démarrage n'est pas égale à 0, ou si la variable d'état n'est pas égale à 0, ou si la variable d'état précédent n'est pas égale à 1, on passe directement à l'étape 108 de division du nombre de cycles par 5, afin de limiter le stockage en mémoire.

A l'étape 109, on teste si la variable de cycles est divisible par 5. Dans le cas où la variable de cycles est divisible par 5, on passe à l'étape 110 d'enregistrement de la valeur de température dans la mémoire de température précédente. De ce fait, on enregistre uniquement une valeur sur 5 des mesures de température réalisées, ce qui permet d'utiliser une mémoire de petite taille.

Si le numéro du cycle n'est pas divisible par 5, on passe à l'étape 111 de test.

A l'étape 111, on teste si une condition de décalage est remplie et si la valeur de température mesurée est inférieure à une valeur de consigne diminuée d'une valeur différentielle, ou si la valeur de température est inférieure à la consigne tandis que le chauffe-eau est alimenté. Dans le cas où le résultat du test est positif, on passe à l'étape 112 d'activation de l'alimentation de puissance et de passage à 1 de la variable d'état. Dans le cas où le test de l'étape 111 est négatif, on passe à l'étape 115.

Après l'étape 112 de mise en chauffe et de passage à 1 de la variable d'état, on teste à l'étape 113 si l'état précédent correspondait à une phase d'activation de l'alimentation. Si l'étape précédente correspondait à une alimentation, on passe à l'étape 114 où on incrémente la valeur de la durée de chauffe d'un incrément.

On teste ensuite à l'étape 115 si la valeur de température est supérieure à la valeur de consigne. Dans le cas où la valeur de température est supérieure à la valeur de consigne, on passe à l'étape 116 dans laquelle on coupe l'alimentation et dans laquelle on passe la variable d'état à 0. Si la valeur de température n'est pas supérieure à la valeur de consigne, on passe à l'étape 120 de rafraîchissement de la mémoire.

Après avoir coupé l'alimentation à l'étape 116, on teste à l'étape 117 si l'état précédent de l'alimentation était activé et si la variable d'état précédente était égale à 1. Dans le cas où le test de l'étape 117 est positif, on passe à l'étape 118 dans laquelle on enregistre en mémoire le numéro de cycle et la durée de chauffe actuelle. On passe ensuite à l'étape 119 dans laquelle on réinitialise la durée de chauffe à 0.

A l'étape 120, on rafraîchit la mémoire et on passe à l'étape 121 qui correspond au test initial dans lequel on teste si la variable de démarrage est égale à 1 et si la variable d'apprentissage est égale à 0. Dans le cas où le test de l'étape 121 est positif, on effectue un bouclage à l'étape 101, suivi d'une incrémentation, sous une périodicité par exemple d'une minute.

Dans le cas où le test de l'étape 121 est négatif, on passe à l'étape 122 correspondant à un calcul de trois formules. La première formule calcule par sommation l'énergie dépensée (ou la puissance dépensée) dans une fenêtre glissante de la première semaine d'apprentissage.

La deuxième formule calcule par sommation linéaire l'énergie dépensée dans une fenêtre glissante de la deuxième semaine d'apprentissage.

La troisième formule calcule par sommation linéaire l'énergie dépensée dans une fenêtre glissante de la troisième semaine d'apprentissage.

On retient ensuite à l'étape 123 la valeur maximale obtenue parmi les trois valeurs calculées à l'étape 122.

A l'étape 124, on compare la valeur retenue à l'étape 123 à un premier seuil pour détecter une utilisation importante du chauffe-eau électrique. Si la comparaison à l'étape 124 révèle une utilisation importante du chauffe-eau électrique, on passe à l'étape 125. Si la comparaison effectuée à l'étape 124 ne révèle pas d'utilisation importante, on passe à l'étape 126 de comparaison à un seuil d'utilisation normale. Si la comparaison de l'étape 126 détecte une utilisation non importante, on passe à l'étape 128 de test d'utilisation peu importante.

Si le test de l'étape 128 est positif, on passe à l'étape 129. Si le test de l'étape 128 est négatif, on passe à une étape 130.

Dans l'étape 125, on affecte à la variable de consigne une valeur de température élevée et une valeur de différentiel prédéterminée, tout en interdisant tout décalage ou retard à l'alimentation du chauffe-eau.

A l'étape 127, on affecte à la variable de consigne une valeur moyenne de consigne inférieure à celle de l'étape 125, on affecte également une valeur de différentiel à la variable de différentiel et on autorise le décalage ou le retard à l'alimentation du chauffe-eau.

A l'étape 129, on affecte à la variable de consigne une valeur faible de température et on affecte à la variable de différentiel une valeur prédéterminée de différentiel, tout en autorisant un décalage ou un retard à l'alimentation.

Ainsi, grâce à l'invention, l'affectation de valeurs particulières de consigne et d'autorisation ou d'interdiction de décalage ou de retard à l'alimentation permet d'adapter la régulation du chauffe-eau électrique à l'utilisation effective de ce chauffe-eau.

Les étapes d'apprentissage comportant, par exemple, les étapes 102 à 107 et 117 à 124, et 126 et 128, ainsi que les étapes de correction 125, 127 et 129 permettent ainsi d'adapter les paramètres ou les consignes de régulation à l'apprentissage effectué de l'utilisation du chauffe-eau électrique.

L'invention permet ainsi d'adapter automatiquement le fonctionnement du chauffe-eau à celui de son utilisateur, de manière à réaliser une économie d'énergie substantielle en supprimant les périodes et les intensités de chauffage inutiles.

Si le test de l'étape 128 est négatif, et que l'on est passé à une étape 130, on affecte à l'étape 130 une valeur de consigne faible à la variable de consigne, par exemple une valeur minimale de température autorisée pour l'eau chaude sanitaire.

On passe ensuite à une étape 131 où l'on teste la différence de la température précédente à la température actuelle pour la comparer à une valeur différentielle de confort.

Si la comparaison de l'étape 131 est positive, on reboucle le cycle à l'étape 101.

Si la comparaison de l'étape 131 est négative, on affecte à la variable de consigne la valeur de température normale de l'étape 127, on affecte à la variable différentielle la valeur de différentiel normal de l'étape 127, tout en désactivant le décalage ou l'autorisation de retard à l'alimentation. On effectue ensuite un bouclage du cycle à l'étape 101.

Pour un chauffe-eau électrique de puissance 1500 W, les valeurs de consigne d'utilisation importante de 70°, de consigne d'utilisation normale de 59°, de consigne d'utilisation faible de 56° et de consigne d'utilisation minimale de 50°, donne généralement satisfaction.

La fenêtre glissante correspondant à la scrutation temporelle et à la mémorisation d'un certain nombre de valeurs est choisie de préférence de l'ordre de plusieurs heures, par exemple de 4 ou 6 heures.

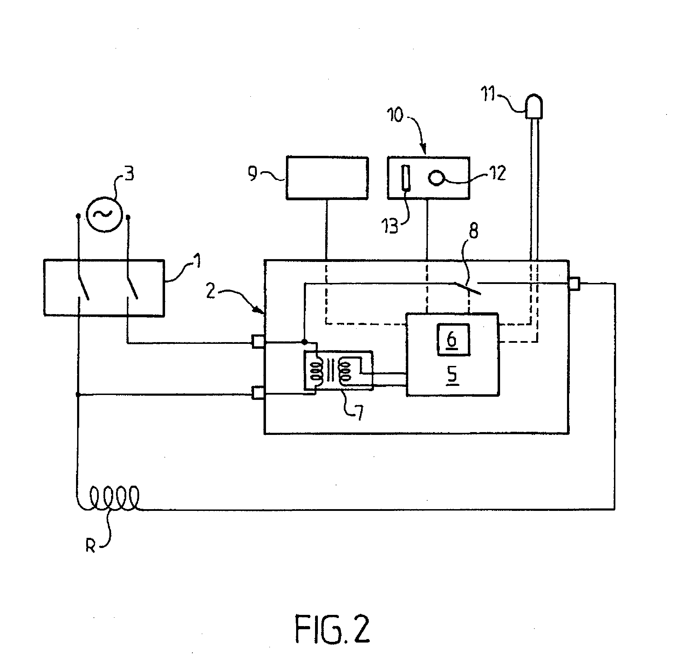

Sur la figure 2, un dispositif de régulation d'alimentation de puissance selon l'invention est représenté.

Le dispositif est destiné à alimenter la résistance chauffante R d'un chauffe-eau électrique non représenté en détail.

Le dispositif peut comporter un ensemble composé d'un moyen mécanique 1 de sécurité thermique et d'une carte électronique 2. Cet ensemble est alimenté par le secteur 3 et connecté sur la résistance chauffante R par :
- un moyen mécanique et électrique, par exemple un embrochage de type Faston (marque déposée), ou
- un moyen électrique, par exemple une liaison filaire, et par un moyen distinct mécanique, par exemple une patte de fixation séparée

La carte électronique 2 comporte un micro contrôleur 5 muni d'un système générant une base de temps 6 ou compteur, et alimenté par un système abaissant la tension 7. Le micro contrôleur 5 contrôle l'ouverture ou la fermeture d'un relais de puissance 8 d'alimentation de la résistance électrique R du chauffe-eau. Le micro contrôleur 5 est relié à un moyen de mesure de température 11, par exemple une sonde de température CTN et peut être également relié à un écran de visualisation 9, un ensemble interface 10.

Le micro contrôleur 5 est apte à détecter des dysfonctionnements et à émettre des signaux d'erreur pour les évènements suivants : absence de chauffe, surchauffe, chauffe à sec ou absence de communication avec la sonde de température 11.

L'interface 10 avec l'utilisateur peut comporter une molette de réglage 12 et un moyen de sélection 13 pour activer ou désactiver le procédé selon l'invention, en autorisant ou en supprimant les étapes d'apprentissage et de correction des paramètres ou consignes de régulation en fonction de l'apprentissage effectué.

Dans le cas où le procédé selon l'invention est hors de fonctionnement par choix de l'utilisateur agissant sur le moyen de sélection 13, le dispositif est comparable à un dispositif de régulation de l'art antérieur ne tenant pas compte de l'utilisation effective du chauffe-eau électrique.

Dans le cas où le procédé selon l'invention est autorisé à fonctionner, la suite d'étapes d'un organigramme identique ou similaire à celui de la figure 1 permet d'obtenir des économies importantes, en particulier dans le cas d'une utilisation moyenne ou peu importante.

L'invention décrite en référence à un mode de réalisation particulier ne lui est nullement limitée, mais couvre au contraire toutes modifications de formes et toutes variantes de réalisation dans le cadre des revendications annexées.

Pour la mise en oeuvre de l'invention, l'utilisation d'un micro contrôleur dans le cas où elle est plus économique est préférable, en prévoyant de munir le micro contrôleur d'un programme reproduisant les étapes d'un procédé de régulation selon l'invention.

## Revendications

1. Procédé de régulation d'alimentation de puissance, notamment d'un chauffe-eau électrique à accumulation, comportant une étape (100) d'initialisation de paramètres variables, une étape (101) de mesure de température d'eau contenue dans le chauffe-eau électrique, des étapes (101, 108-116) de régulation, des étapes d'apprentissage (102-107, 117-124, 126, 128) et des étapes de correction (125, 127, 129, 130, 132) des paramètres ou consignes de régulation en fonction de l'apprentissage effectué,
**caractérisé par** : une étape (102) de test pour comparer le nombre de cycles effectués à une première durée prédéterminée, une étape (103) de réinitialisation du nombre de cycles dans le cas où le nombre de cycles a dépassé la première durée prédéterminée et, dans le cas où le nombre de cycles est inférieur à la première durée prédéterminée, une étape (104) correspondant à un test pour comparer le nombre de cycles à une deuxième durée prédéterminée, une étape (105) d'initialisation d'une variable d'apprentissage en cas de dépassement de la deuxième durée prédéterminée, et une étape (106) de test de valeur d'une variable de démarrage et d'une variable d'état, ainsi que d'une variable d'état précédent, une étape (107) d'effacement de la mémoire, d'initialisation de la variable de démarrage et d'initialisation du nombre de cycles, une étape (108) de division du nombre de cycles par un nombre entier afin de limiter le stockage en mémoire en enregistrant uniquement une valeur sur un nombre entier de mesures de température réalisées, en permettant ainsi d'utiliser une mémoire de petite taille ;
et par une étape (122) correspondant à un premier calcul d'énergie dépensée dans une première fenêtre glissante d'apprentissage, un deuxième calcul d'énergie dépensée dans une deuxième fenêtre glissante d'apprentissage, et un troisième calcul d'énergie dépensée dans une troisième fenêtre glissante d'apprentissage, en vue de l'affectation de valeurs particulières de consigne et d'autorisation ou d'interdiction de décalage ou de retard à l'alimentation pour adapter la régulation du chauffe-eau électrique à l'utilisation effective de ce chauffe-eau.

2. Procédé de régulation selon la revendication 1, dans lequel les étapes de régulation (101,108-116) correspondent à un cycle temporel indépendant du cycle temporel des étapes d'apprentissage (102-107, 117-124, 126, 128) et des étapes de correction (125, 127, 129, 130, 132).

3. Procédé de régulation selon la revendication 1, dans lequel les étapes (101,108-116) de régulation les étapes (102-107, 117-124, 126, 128) d'apprentissage et des étapes (125, 127, 129, 130, 132) de correction des paramètres ou consignes de régulation en fonction de l'apprentissage effectué correspondent au même cycle temporel.

4. Dispositif de régulation d'alimentation de puissance, notamment d'un chauffe-eau électrique à accumulation, pour la mise en oeuvre d'un procédé de régulation selon l'une quelconque des revendications 1 à 3, comportant des moyens de régulation, des moyens d'apprentissage, et des moyens de correction des paramètres ou consignes de régulation en fonction de l'apprentissage effectué, le dispositif comportant une mémoire de stockage des paramètres ou consignes de régulation, avant et après correction éventuelle en fonction d'un apprentissage effectué, et comportant un microcontrôleur (5) programmable contenant un programme d'exécution des étapes d'un procédé selon l'une quelconque des revendications 1 à 3.

5. Dispositif selon la revendication 4, **caractérisé par le fait que** le dispositif comporte un ensemble composé d'un moyen (1) mécanique de sécurité thermique et d'un ensemble (2) portant les moyens de régulation, les moyens d'apprentissage et les moyens de correction des paramètres ou consignes de régulation en fonction de l'apprentissage effectué.

6. Dispositif selon la revendication 5, **caractérisé par le fait que** l'ensemble (2) portant les moyens de régulation, les moyens d'apprentissage et les moyens de correction des paramètres ou consignes de régulation présente une conformation de carte électronique pourvue d'au moins un système (5) générant une base de temps de cycle temporel.

7. Dispositif selon l'une quelconque des revendications 4 à 6, **caractérisé par le fait que** le dispositif comporte des moyens d'interface (10) avec un utilisateur et au moins un moyen (11) de mesure de température relié aux moyens de régulation, aux moyens d'apprentissage et aux moyens de correction de paramètres ou consignes de régulation.

## Patentansprüche

1. Verfahren zur Leistungsregelung, insbesondere eines elektrischen Heißwasserbereiters und -speichers, das einen Schritt (100) der Initialisierung variabler Parameter, einen Schritt (101) der Temperaturmessung des in dem elektrischen Heißwasserbereiter enthaltenen Wassers, Regelungsschritte (101, 108-116), Lernschritte (102-107, 117-124, 126, 128) und Korrekturschritte (125, 127, 129, 130, 132) der Regelungs- oder Referenzparameter in Abhängigkeit von der durchgeführten Lehre aufweist,
**gekennzeichnet durch**: einen Testschritt (102), um die Anzahl mit einer ersten vorbestimmten Dauer durchgeführter Zyklen zu vergleichen, einen Reinitialisierungsschritt (103) der Zyklenanzahl, wenn die Zyklenanzahl die erste vorbestimmte Dauer überschritten hat, und, wenn die Zyklenanzahl unter der ersten vorbestimmten Dauer liegt, einen Schritt (104), der einem Test entspricht, um die Zyklenanzahl mit einer zweiten vorbestimmten Dauer zu vergleichen, einen Initialisierungsschritt (105) einer Lernvariablen bei Überschreitung der zweiten vorbestimmten Dauer und einen Testschritt (106) eines Werts einer Startvariablen und einer Zustandsvariablen sowie einer vorhergehenden Zustandsvariablen, einen Schritt (107) der Löschung des Speichers, der Initialisierung der Startvariablen und der Initialisierung der Zyklenanzahl, einen Schritt (108) der Division der Zyklenanzahl **durch** eine ganze Zahl, um die Speicherung im Speicher zu begrenzen, wobei nur ein Ganzzahlwert durchgeführter Temperaturmessungen gespeichert wird, so dass die Verwendung eines kleinen Speichers möglich ist,
und **durch** einen Schritt (122), der einer ersten Berechnung in einem ersten Lerngleitfenster verbrauchter Energie, einer zweiten Berechnung in einem zweiten Lerngleitfenster verbrauchter Energie und einer dritten Berechnung in einem dritten Lerngleitfenster verbrauchter Energie entspricht, zwecks Zuweisung besonderer Referenz- und Genehmigungs- oder Verbotswerte für eine abweichende oder verzögerte Versorgung, um die Regelung des elektrischen Heißwasserbereiters an die tatsächliche Benutzung dieses Heißwasserbereiters anzupassen.

2. Regelungsverfahren nach Anspruch 1, wobei die Regelungsschritte (101, 108-116) einem zeitlichen Zyklus entsprechen, der vom zeitlichen Zyklus der Lernschritte (102-107, 117-124, 126, 128) und der Korrekturschritte (125, 127, 129, 130, 132) unabhängig ist.

3. Regelungsverfahren nach Anspruch 1, wobei die Regelungsschritte (101, 108-116), die Lernschritte (102-107, 117-124, 126, 128) und Korrekturschritte (125, 127, 129, 130, 132) der Regelungs- oder Referenzparameter in Abhängigkeit von der durchgeführten Lehre demselben zeitlichen Zyklus entsprechen.

4. Vorrichtung zur Leistungsregelung, insbesondere eines elektrischen Heißwasserbereiters und -speichers, zur Durchführung eines Regelungsverfahrens nach einem der Ansprüche 1 bis 3, die Regelungsmittel, Lernmittel und Korrekturmittel der Regelungs- oder Referenzparameter in Abhängigkeit von der durchgeführten Lehre aufweist, wobei die Vorrichtung einen Speicher zum Speichern der Regelungs- oder Referenzparameter nach und vor eventueller Korrektur in Abhängigkeit von einer durchgeführten Lehre aufweist, und einen programmierbaren Mikrocontroller (5) aufweist, der ein Ausführungsprogramm der Schritte eines Verfahrens nach einem der Ansprüche 1 bis 3 enthält.

5. Vorrichtung nach Anspruch 4, **dadurch gekennzeichnet, dass** die Vorrichtung eine Einheit aufweist, die sich aus einem mechanische Mittel (1) thermischer Sicherheit und einer Einheit (2), die die Regelungsmittel, die Lernmittel und die Korrekturmittel der Regelungs- oder Referenzparameter in Abhängigkeit von der durchgeführte Lehre trägt, zusammensetzt.

6. Vorrichtung nach Anspruch 5, **dadurch gekennzeichnet, dass** die Einheit (2), die die Regelungsmittel, die Lernmittel und die Korrekturmittel der Regelungs- oder Referenzparameter trägt, eine elektronische Kartenkonformation aufweist, die mit mindestens einem System (5) ausgestattet ist, das eine Zeitzyklus-Zeitdatenbank generiert.

7. Vorrichtung nach einem der Ansprüche 4 bis 6, **dadurch gekennzeichnet, dass** die Vorrichtung Schnittstellenmittel (10) mit einem Benutzer und mindestens ein Temperaturmessmittel (11), das mit den Regelungsmitteln, den Lernmitteln und den Korrekturmitteln der Regelungs- oder Referenzparameter verbunden ist, aufweist.

## Claims

1. A method for controlling of power, in particular for an electric storage water heater, comprising a step (100) for initializing variable parameters, a step (101) for measuring the temperature of the water contained in the electric water heater, control steps (101, 108-116), learning steps (102-107, 117-124, 126, 128) and correction steps (125, 127, 129, 130, 132) for the control parameters or instructions based on the learning done,
**characterized by**: a test step (102) to compare the number of cycles to a first predetermined duration; a step (103) for resetting the number of cycles in the event the number of cycles has exceeded the first predetermined duration and, in the event the number of cycles is below the first predetermined duration, a step (104) corresponding to a test to compare the number of cycles to a second predetermined duration; a step (105) for initializing variable learning if the second predetermined duration is exceeded; and a step (106) for testing the value of a startup variable and a status variable, as well as a previous status variable; a step (107) for erasing the memory, initializing the startup variable and initializing the number of cycles; a step (108) for dividing the number of cycles by an integer in order to limit the storage in memory by recording only a value over an integer number of temperature measurements done, thereby making it possible to use a small memory;
and by a step (122) corresponding to a first energy expenditure calculation in a first sliding learning window, a second energy expenditure calculation in a second sliding learning window, and a third energy expenditure calculation in a third sliding learning window, in order to assign particular values for the setpoint and for allowing or prohibiting a power offset or delay to adapt the control of the electric water heater to the actual use of that water heater.

2. The control method according to claim 1, wherein the control steps (101, 108-116) correspond to a time cycle independent of the time cycle of the learning steps (102-107, 117-124, 126, 128) and correction steps (125, 127, 129, 130, 132).

3. The control method according to claim 1, wherein the control steps (101, 108-116), the learning steps (102-107, 117-124, 126, 128) and the correction steps (125, 127, 129, 130, 132) for the control parameters or instructions based on the learning done correspond to the same time cycle.

4. A device for controlling of power, in particular for an electric storage water heater, for implementing a control method according to any one of claims 1 to 3, comprising control means, leaning means, and means for correcting the control parameters or instructions based on the learning done, the device comprising a memory for storing the control parameters or instructions, before and after any correction based on learning done, and comprising a programmable microcontroller (5) containing a program to carry out the steps of a method according to any one of claims 1 to 3.

5. The device according to claim 4, **characterized in that** the device comprises an assembly made up of a mechanical thermal safety means (1) and an assembly (2) bearing the control means, the learning means and the correction means for the control parameters or instructions based on the learning done.

6. The device according to claim 5, **characterized in that** the assembly (2) bearing the control means, the learning means and the correction means for the control parameters or instructions is configured as electronic board provided with at least one system (5) generating a temporal cycle time base.

7. The device according to any one of claims 4 to 6, **characterized in that** the device comprises interface means (10) for interfacing with a user and at least one temperature measurement means (11) connected to the control means, the learning means and the means for correcting control parameters or instructions.
